(19) Europäisches Patentamt
European Patent Office
Office européen des brevets

(11) **EP 3 859 980 A1**

(12) **EUROPEAN PATENT APPLICATION**

(43) Date of publication:
04.08.2021 Bulletin 2021/31

(51) Int Cl.:
*H04B 1/18* (2006.01)　　　*G06K 19/07* (2006.01)
*G06K 7/00* (2006.01)　　　*H04B 5/00* (2006.01)

(21) Application number: 20154405.3

(22) Date of filing: 29.01.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: EM Microelectronic-Marin SA
2074 Marin (CH)

(72) Inventor: VENCA, M. Alessandro
2068 Hauterive (CH)

(74) Representative: ICB SA
Faubourg de l'Hôpital, 3
2001 Neuchâtel (CH)

(54) **CONTROL SYSTEM FOR UHF RFID PASSIVE TAGS**

(57) The present invention relates to a power control unit (100) configured to monitor the output power of a device (900) having an input impedance and a input impedance controlling terminal (913) configured to be plugged to said power control unit (100) and to modify said input impedance.

Said power control unit (100), according to the invention, comprises at least control circuit (110) configured to sense said output power of said device (900) and at least a control unit (120) configured to receive said sensed power value, to establish a control value and to send said control value to said impedance controlling terminal (913) such as to modify said input impedance.

## Fig. 1

**Description**

Technical field

The present invention relates to the field of power control unit and in particular of a power control unit for UHF RFID passive tags.

State of the art

In general, in an RFID communication system, the receiving tag antenna is adapted to maximize the received signal at a specific frequency, i.e. the tuning frequency fo. The adaptation is achieved for a specific antenna and tag input impedance.

In this adapted condition, the received power is maximized, and the Mismatch Loss, ML for short, is minimized.

Every time the input frequency signal carrier fc differs from fo, or the tag or antenna impedances differ from the value needed to achieve adaptation the system suffers a loss in the received power.

In operative conditions, the above disrupting scenario may happen for the following reasons:

- The input signal frequency can operate at different frequencies in the UHF RFID band [860-960] MHz;

- Variations in electronic components values due to process or temperature may cause variation in the tag input impedance; and,

- Environmental conditions in which the tag operates, e.g. medium, humidity, temperature, may alter the antenna adaptation.

Therefore, there is a need to maximize the tag reading distance and this independently of the operative conditions.

Summary of the invention

In order to achieve this objective, the present invention provides a power control unit configured to monitor the output power of a device having an input impedance between a first input terminal and a second input terminal, and having a first output terminal, a second output terminal and a input impedance controlling terminal configured to be plugged to said power control unit; said input impedance controlling terminal is configured to modify said input impedance; said power control unit comprising at least:

- a control circuit: said at least control circuit is configured to sense said output power of said device through said first output terminal and said second output terminal and to transmit a sensed power value as a function of the sensed output power; and

- a control unit: said at least a control unit is configured to receive said sensed power value, to establish a control value and to send said control value to said impedance controlling terminal such as to modify said input impedance.

Thus, this configuration allows sensing the received power and take actions to minimize the tag sensitivity and thus maximize the tag reading distance.

According to an embodiment, said sensed power value comprises a voltage sensed power value and/or current sensed power value.

According to an embodiment, said voltage sensed power value and/or said current sensed power value is or are analog signal.

Thus, the transmission of said sensed power value as a function of the sensed output power is quicker than digital signal.

According to an embodiment, said control circuit comprises at least one control circuit configured to determine at least a first physical quantity between said first terminal and said second terminal and to measure at least a second physical quantity.

According to an embodiment, said control circuit is configured to control a output current from said device and to measure a output voltage between said first output terminal and said second output terminal at lower input power levels across said first input terminal and said second input terminal, and/or to control said output voltage and measure said output current at higher input power levels.

According to an embodiment, said at least control circuit is configured to conduct a current value by diverting said output current from said first output terminal to said second output terminal such as to evaluate the sensed power value.

According to an embodiment, said at least a control circuit comprises at least:

- a power input terminal: said power input terminal is configured to sense said output current and/or said output voltage value of said device;

- an internal reference: said at least internal reference is configured to set a reference value;

- a comparison circuit: said at least a comparison circuit configured to compare said reference value to said output current value and/or said output voltage value; and

- a current limited buffer: said at least a current limited buffer is configured to divert the current from said first output terminal to said second output terminal such as to evaluate the sensed power value.

According to an embodiment, said at least control unit comprises at least a controller configured to establish an established voltage value and/or an established current value as a function of said sensed current value and/or said sensed voltage value of said device.

According to an embodiment, said at least bias supplier comprises at least a converter configured to convert said sensed current value and/or said sensed voltage value of said device into a digital voltage value and/or a digital current value.

Brief description of the drawings

The foregoing and other purposes, features, aspects and advantages of the invention will become apparent from the following detailed description of the embodiments, given by way of illustration and not limitation with reference to the accompanying drawings, in which:

- figure 1 represents a power control unit 100 according to the invention;

- figures 2 shows a block diagram;

- figure 3 illustrates a parallel equivalent circuit and a serie equivalent circuit of a device **900;**

- figures 4A-4G represent a AutoMatch tag performances at $f_{in} = f_0$;

- figure 5 represents a AutoMatch tag performances at $f_{in} = f_0 - 55MHz$; and

- figure 6 illustrates a AutoMatch tag performances at $f_{in} = f_0 + 45MHz$.

Description of the invention

The present invention relates to a power control unit **100** configured to monitor the output power of a device **900** such as to maximize the received signal at a specific frequency, i.e. the tuning frequency fo.

Indeed, said power control unit **100** may be connected to a Programmable Self-Biased Gate Control **900,** PSBGC **900** for short.

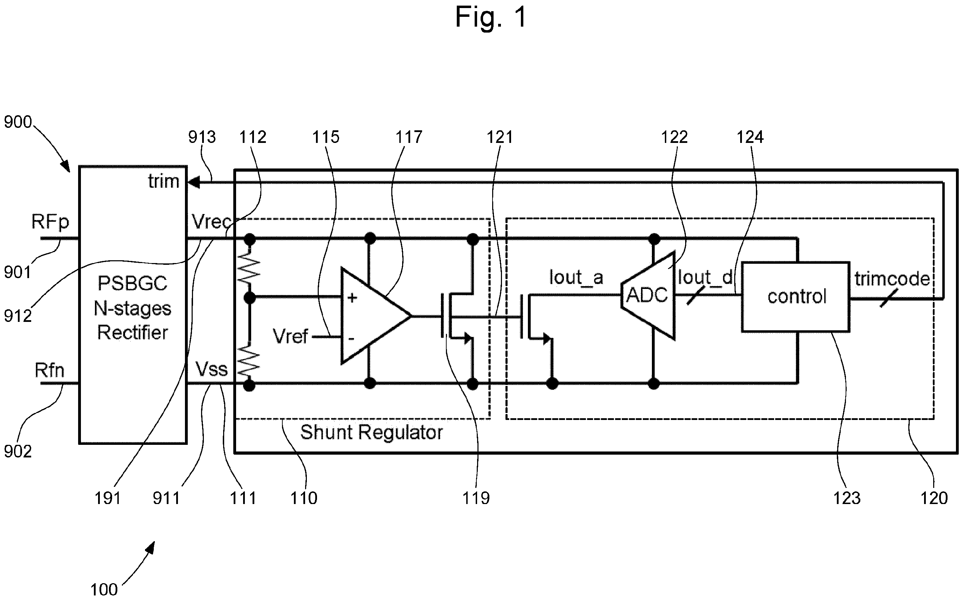

Said Programmable Self-Biased Gate Control **900** or PSBGC **900** may have an input impedance between a first input terminal **901** and a second input terminal **902**, and a first output terminal **911**, a second output terminal **912** and a input impedance controlling terminal **913**, as illustrated in fig.1.

Said input impedance controlling terminal **913** may be configured to be plugged to said power control unit **100** and to modify said input impedance according a signal from said power control unit **100**.

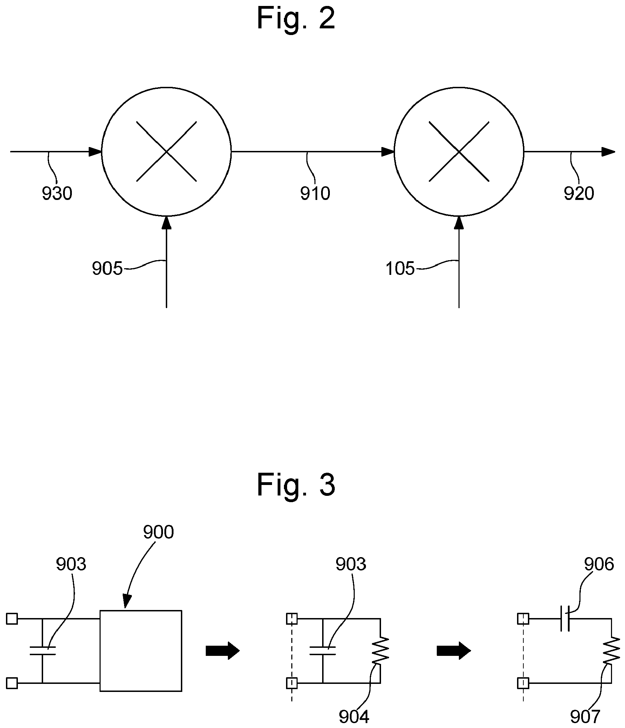

Effectively, to maximize the received power, $P_{in}$ **910** for short, is a necessary but not yet enough condition to maximize the load power, i.e. the rectifier output power, $P_{out}$ **920** for short, and in order to maximize the load power it is necessary to maximize also the rectifier efficiency, *eff* **105** for short, see fig. 2.

The relation between the power available at the antenna, $P_{avail}$ **930** for short, and the load power, $P_{out}$ for short, being:

$$P_{out} = P_{avail} * \frac{eff}{ML}$$

where

$$eff = \frac{P_{out}}{P_{in}} \text{ and } ML = \frac{P_{avail}}{P_{in}}$$

The mismatch loss, *ML* **905** for short, can be expressed in terms of the series impedances of antenna and tag as:

$$\frac{1}{ML} = \frac{4R_a R_{ts}}{(R_a + R_{ts})^2 + (X_a + X_{ts})^2}$$

Where the antenna series impedance is $Z_a = R_a + jX_a$ and the tag series impedance is $Z_{ts} = R_{ts} + jX_{ts}$.

The *ML* is minimized, i.e. *ML* = 1, at conjugate matching. In others words, when $R_a = R_{ts}$ and $X_a = X_{ts}$.

The following «match» parameter is used hereafter to quantify the load power for a given available power:

$$\frac{eff}{ML} = eff * \frac{4R_a R_{ts}}{(R_a + R_{ts})^2 + (X_a + X_{ts})^2} = \frac{P_{out}}{P_{avail}} \text{ with } 0 \leq \frac{eff}{ML} \leq 1$$

In a RFID tag front-end the input equivalent circuit is a parallel of a resistance, $R_{tp}$ **904** for short, and a capacitance, $C_{tp}$ **903** for short.

The input parallel resistance is defined by the rectifier input parallel resistance.

At the frequency $f_0$ the parallel equivalent circuit can be represented by the equivalent series circuit, $R_{ts}$ **907** and $C_{ts}$ **906,** according to the transformation formulas:

$$R_{ts} = \frac{R_{tp}}{1 + Q^2}$$

$$C_{ts} = C_{tp} \frac{1 + Q^2}{Q^2}$$

$$Q = 2\pi f_0 C_{tp} R_{tp}$$

Said power control unit **100**, according to the present invention, may sense the rectifier output power $P_{out}$ and controls the match parameter thus in turn controlling the rectifier input resistance $R_{tp}$ and efficiency *eff.* The match parameter may be a function of *ML,* i.e. function of $R_{ts}$ and $R_{tp}$, and $eff$.

The control on the rectifier input resistance and efficiency is based on charge pump topology, as described in EP19207239, in particular, the applicant hereby incorporate p.5, l.24 - p7, l.30, p.8, l.3 - p.9, l.17, p.9, l.20 - p.10, l.2 and p.11, l.1-24 by reference to EP19207239.

More precisely, the control on the rectifier input resistance and efficiency may act on a gate controller of a charge pump converter stage.

Said charge pump converter stage comprising at least a switching element having a conduction path with a first terminal and a second terminal, and a gate configured to control the current flowing through said conduction path, said conduction path being configured to provide a signal. Said gate controller comprising at least a coupling capacitor and at least a signal input configured to be connected to a second terminal of a charge pump converter stage and/or to receive a signal, preferably from an antenna, from an integrated circuit and/or from a charge pump converter stage and to transfer said signal to said first terminal of conduction path of said at least a switching element.

Further, said gate controller of a charge pump converter stage may comprise at least a bias input configured to be connected to said gate and to establish a voltage value and/or a current value of said gate.

Thus, for a given input power, by maximizing the output power in a PSBGC charge-pump relatively constant over process and temperature variations for example, input resistance $R_{tp}$ and rectifier efficiency $eff$ are obtained.

It follows that said power control unit **100,** by reducing the spread of the match parameter makes the Sensitivity and the reading distance tag performance more constant and reliable across temperature and process variations.

It also follows that said power control unit **100,** by reducing the spread of the rectifier input resistance $R_{tp}$ makes the tag quality factor $Q$ more constant over temperature and process variations enabling more consistent Sensitivity and tag reading distance performances across the UHF band.

At the resonance, i.e. when $X_a = -X_{ts}$, it may be possible that the equivalent series resistance at resonance $R_{ts}$ matches the antenna resistance $R_a$ minimizing the mismatch loss *ML*.

If the $P_{avail}$ is the minimum input power at which the Tag can operate, then said power control unit **100** may minimize the tag Sensitivity and may maximize the tag reading distance over temperature and process variations.

Thus, using a PSBGC rectifier and said power control unit **100**, it is possible to perform an automatic control of the input resistance and efficiency of the match parameter of the PSBGC rectifier.

In order to achieve this objective, said power control unit **100** comprising at least a control circuit **110**, and at least a control unit **120.**

Said at least control circuit **110** is configured to sense said output power of said device **900** through said first output terminal **911** and said second output terminal **912** and to transmit a sensed power value **191**, which may comprise a voltage sensed power value and/or current sensed power value, as a function of the sensed output power. According to an embodiment, said voltage sensed power value and/or said current sensed power value may be transmitted as analog signal to said at least a control unit **120**, which is quicker than digital signal.

Said at least a control unit **120** may be configured to receive said sensed power value, to establish a control value and to send said control value to said impedance controlling terminal **913** such as to modify said input impedance. Thus, said power control unit **100** may sense the received power and may take actions to minimize the tag sensitivity and thus may maximize the tag reading distance.

As depicted in figure 1, said control circuit **110** may be configured to control a output current from said device **900** and to measure a output voltage between said first output terminal **911** and said second output terminal **912** at lower input power levels across said first input terminal **901** and said second input terminal **902**, and/or to control said output voltage and measure said output current at higher input power levels. Therefore, said control circuit **110** may comprise at least one control circuit configured to determine at least a first physical quantity between said first terminal **911** and said second terminal **912** and to measure at least a second physical quantity.

In other words, the device **900** output power is sensed with said at least a control circuit **110**, which comprises at least a power input terminal **112** configured to sense said output current and/or said output voltage value of said device **900** and at least an internal reference **115** configured to set a reference value. During the adaptation of the impedance, said at least an internal reference **115** may be set such that said output current and/or said output voltage value of said device **900** is slightly above the power-on-reset or POR value.

On top of that, at least a comparison circuit **117**, comprised in said at least control circuit **110**, is configured to compare said reference value to said output current value and/or said output voltage value sensed by at least a power input terminal **112**.

More specifically, said at least control circuit **110** is configured to conduct a current value by diverting said output current from said first output terminal **911** to said second output terminal **912** such as to evaluate said sensed power value.

Said output current is diverted by at least a current limited buffer **119** of said at least a control circuit **110**. Said at least a current limited buffer **119** is configured to divert the current from said first output terminal **911** to said second output terminal **912** such as to evaluate the sensed power value. Indeed, said at least a current limited buffer **119** may be a shunt regulator used as control circuit, and said diverted current from said first output terminal **911** to said second output terminal **912** or current shunt may be proportional to said sensed power value.

The analog output of said at least control circuit **110** carries the information of the device **900** output power, which is converted to a digital word by said at least control unit **120**, and more specifically by at least a converter **122**. The latter, i.e. said at least a converter **122**, is configured to convert said sensed current value and/or said sensed voltage value of said device **900** into a digital voltage value **124** and/or a digital current value **124**, in other word, a copy of said diverted current **121** is converted to a digital word **124** by said at least a converter **122**.

Said at least control unit **120**, previously mentioned, comprises at least a controller **123** configured to establish an established voltage value and/or an established current value as a function of said sensed current value and/or said sensed voltage value of said device **900**, such as to find the best trim code to maximize Pout_d.

Thus, thanks to this arrangement, said power control unit **100** may reduce the spread of at least Input Resistance, Mismatch Loss, Quality Factor, Rectifier Efficiency and/or Match parameter over temperature and process variations.

In addition to the above advantage, if said device **900**, which may be a rectifier, is designed such that the tag input resistance matches the antenna resistance at the minimum input power at which the tag can operate, the Tag Sensitivity may be minimized and/or the Tag reading distance may be maximized over temperature and process variations.

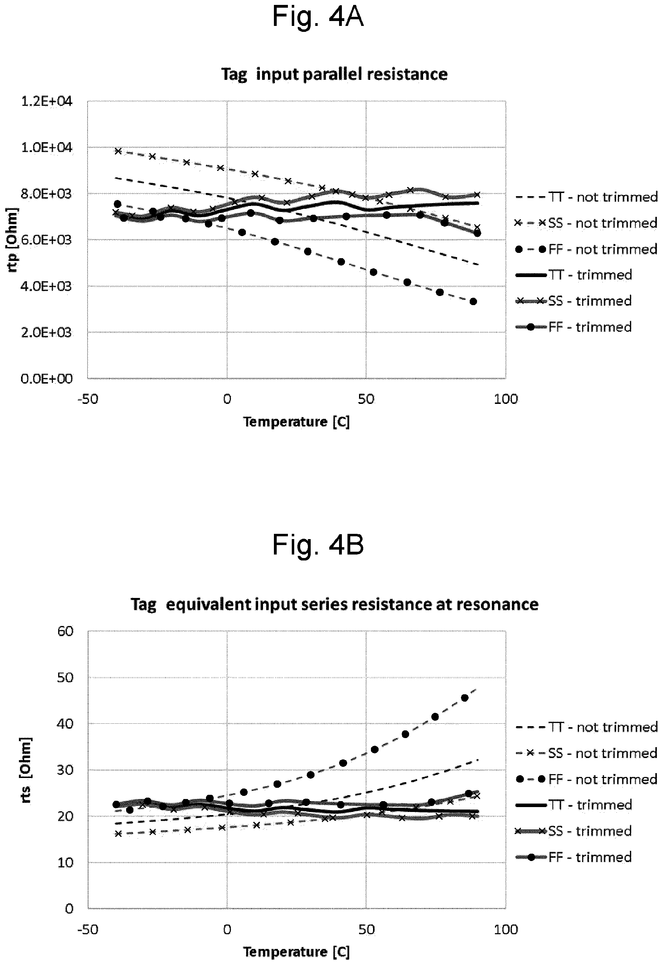

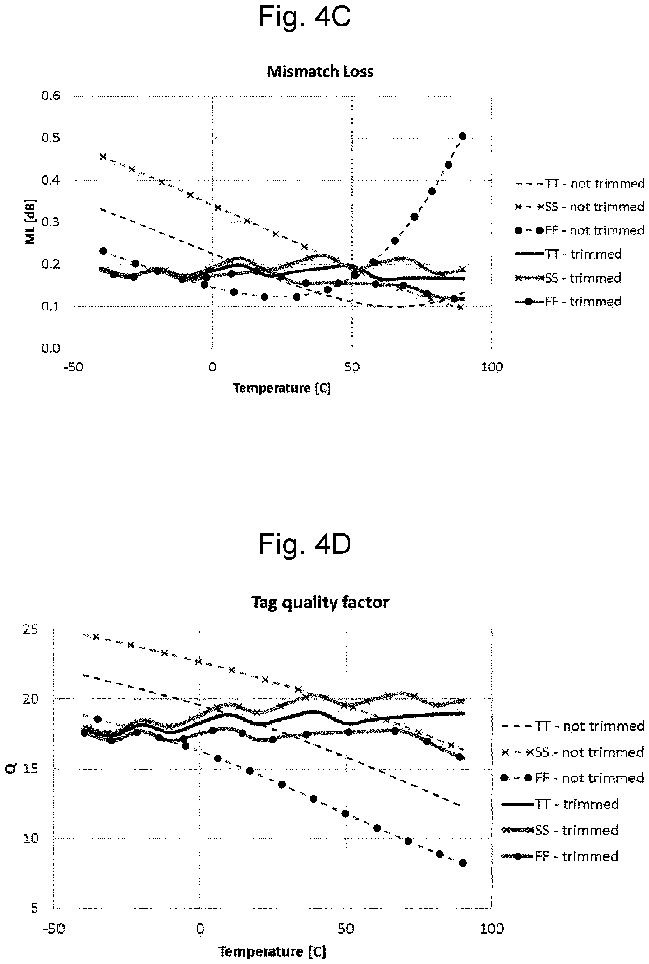

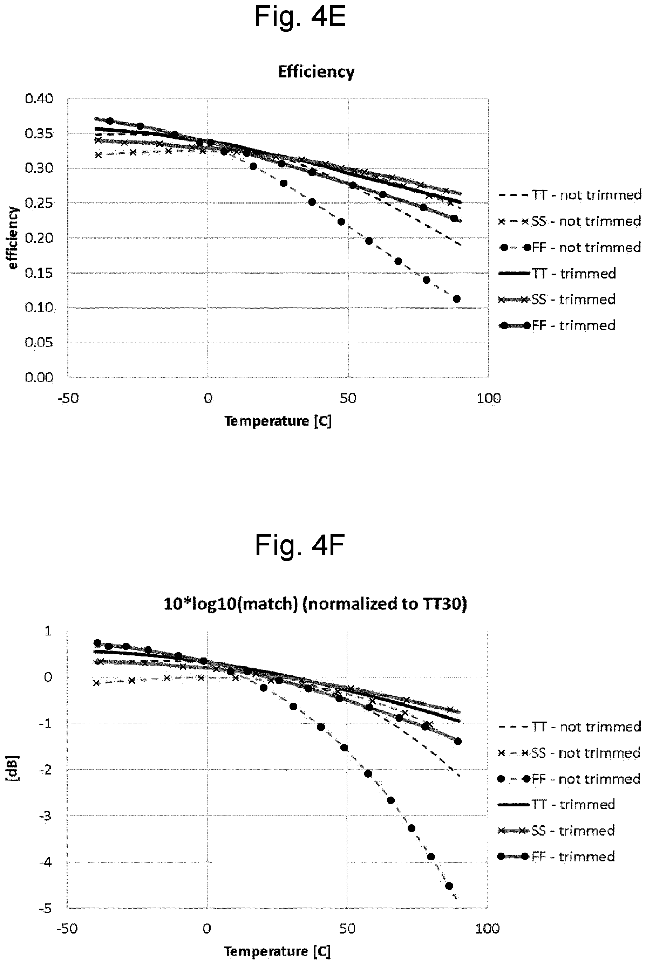

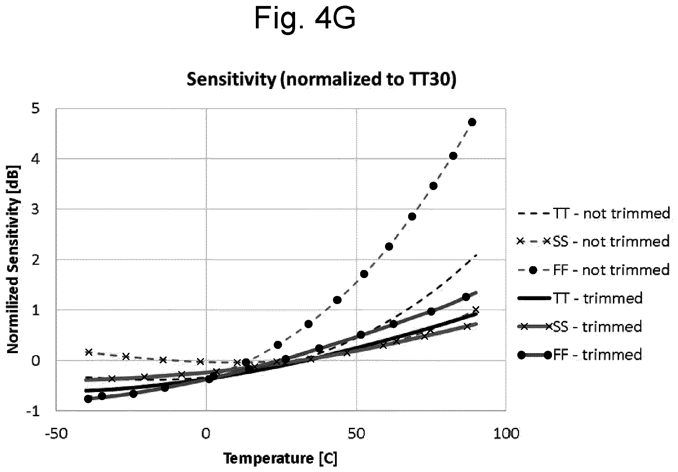

Figs. 4A-4G represent Tag input parallel resistance $R_{tp}$, input equivalent series resistance $R_{ts}$, Tag mismatch loss $ML$ and Tag Quality Factor Q respectively, for a given input power as a function of temperature and over three process corners for a tag using an 8-stages differential Dickson charge pump with rectifier and with said power control unit **100**. In the not trimmed case the trim code to the rectifier is kept fixed. In the trimmed case the trim code to the rectifier is determined by said power control unit 100 control loop.

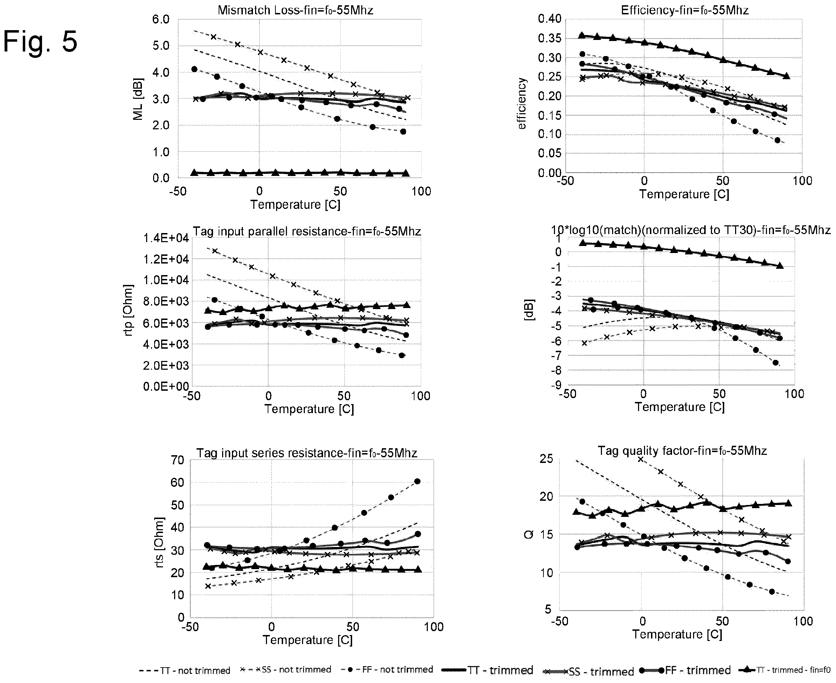

The AutoMatch tag performances are here evaluated for a given input power at $f_{in} = f_0 - 55MHz$, see fig. 5, with a series resonant RLC antenna-tag equivalent circuit tuned at $f_0$ and with an antenna quality factor equals to 16. In all the plots the performances out of resonance are compared with the TT-trimmed case at $f_{in} = f_0$. The «match» parameter is maximized in all the conditions even with an input frequency out of resonance $X_a \neq X_{ts}$.

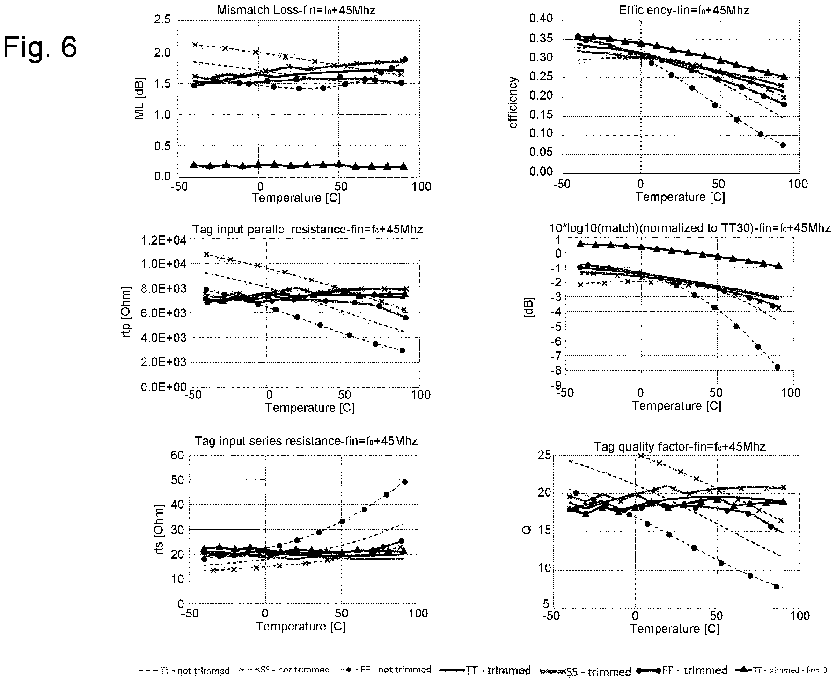

In fig. 6, the AutoMatch tag performances are evaluated for a given input power at $f_{in} = f_0 + 45MHz$ with a series resonant RLC antenna-tag equivalent circuit tuned at f0and with an antenna quality factor equals to 16. In all the plots the performances out of resonance are compared with the TT-trimmed case at $f_{in} = f_0$. The «match» parameter is maximized in all the conditions even with an input frequency out of resonance $X_a \neq X_{ts}$.

**Claims**

1. Power control unit (100) configured to monitor the output power of a device (900) having an input impedance between a first input terminal (901) and a second input terminal (902), and having a first output terminal (911), a second output terminal (912) and a input impedance controlling terminal (913) configured to be plugged to said power control unit (100); said input impedance controlling terminal (913) is configured to modify said input impedance; said power control unit (100) comprising at least:

   - a control circuit (110): said at least control circuit (110) is configured to sense said output power of said device (900) through said first output terminal (911) and said second output terminal (912) and to transmit a sensed power value as a function of the sensed output power; and
   - a control unit (120): said at least a control unit (120) is configured to receive said sensed power value, to establish a control value and to send said control value to said impedance controlling terminal (913) such as to modify said input impedance.

2. Power control unit (100) according claim 1, wherein said sensed power value comprises a voltage sensed power value and/or current sensed power value.

3. Power control unit (100) according claim 1 or 2, wherein said control circuit (110) comprises at least a control circuit (110) configured to determine at least a first physical quantity between said first terminal (911) and said second terminal (912) and to measure at least a second physical quantity.

4. Power control unit (100) according to any preceding claims, wherein said control circuit (110) is configured to control a output current from said device (900) and to measure a output voltage between said first output terminal (911) and said second output terminal (912) at lower input power levels across said first input terminal (901) and said second input terminal (902), and/or to control said output voltage and measure said output current at higher input power levels.

5. Power control unit (100) according to any preceding claims, wherein said at least control circuit (110) is configured to conduct a current value by diverting said output current from said first output terminal (911) to said second output terminal (912) such as to evaluate the sensed power value.

6. Power control unit (100) according any preceding claims, wherein said at least a control circuit (110) comprises at least:

   - a power input terminal (112): said power input terminal (112) is configured to sense said output current and/or said output voltage value of said device (900);
   - an internal reference (115): said at least internal reference (115) is configured to set a reference value;
   - a comparison circuit (117): said at least a comparison circuit (117) configured to compare said reference value to said output current value and/or said output voltage value; and
   - a current limited buffer (119): said at least a current limited buffer (119) is configured to divert the current from said first output terminal (911) to said second output terminal (912) such as to evaluate the sensed power value.

7. Power control unit (100) according to any preceding claims, wherein said at least control unit (120) comprises at least a controller (123) configured to establish an established voltage value and/or an established current value as a function of said sensed current value and/or said sensed voltage value of said device (900).

8. Power control unit (100) according any preceding claims, wherein said at least bias supplier (120) comprises at least a converter (122) configured to convert said sensed current value and/or said sensed voltage value of said device (900) into a digital voltage value and/or a digital current value.

Fig. 1

## Fig. 2

## Fig. 3

# Fig. 4A

**Tag input parallel resistance**

# Fig. 4B

**Tag equivalent input series resistance at resonance**

# Fig. 4C

**Mismatch Loss**

# Fig. 4D

**Tag quality factor**

# Fig. 4E

**Efficiency**

# Fig. 4F

**10*log10(match) (normalized to TT30)**

# Fig. 4G

Sensitivity (normalized to TT30)

# Fig. 5

Mismatch Loss-fin=f₀-55Mhz

Efficiency-fin=f₀-55Mhz

Tag input parallel resistance-fin=f₀-55Mhz

10*log10(match)(normalized to TT30)-fin=f₀-55Mhz

Tag input series resistance-fin=f₀-55Mhz

Tag quality factor-fin=f₀-55Mhz

- - - TT - not trimmed   × - × SS - not trimmed   - ● - FF - not trimmed   ──── TT - trimmed   ──×── SS - trimmed   ●──● FF - trimmed   ──▲── TT - trimmed - fin=f0

EP 3 859 980 A1

Fig. 6

Europäisches
Patentamt

European
Patent Office

Office européen
des brevets

# EUROPEAN SEARCH REPORT

Application Number

EP 20 15 4405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/181682 A1 (KIM HAK YUN [KR] ET AL) 13 June 2019 (2019-06-13) <br> * paragraph [0002] - paragraph [0009] * <br> * paragraph [0036] - paragraph [0088] * <br> * figures 1-11 * <br> ----- | 1-8 | INV. <br> H04B1/18 <br> G06K19/07 <br> G06K7/00 <br> H04B5/00 |
| X | US 2016/254679 A1 (LIU KUO-CHI [TW] ET AL) 1 September 2016 (2016-09-01) <br> * paragraph [0005] - paragraph [0012] * <br> * paragraph [0052] - paragraph [0089] * <br> * figures 1-12 * <br> ----- | 1-8 | |
| X | US 2010/277003 A1 (VON NOVAK WILLIAM H [US] ET AL) 4 November 2010 (2010-11-04) <br> * paragraph [0008] - paragraph [0011] * <br> * paragraph [0026] - paragraph [0108] * <br> * figures 1-11 * <br> ----- | 1-8 | |

TECHNICAL FIELDS SEARCHED (IPC)

H04B
G06K
H03H
H02J

The present search report has been drawn up for all claims

| Place of search | Date of completion of the search | Examiner |
|---|---|---|
| Munich | 24 July 2020 | Patrovsky, Andreas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 15 4405

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2020

| Patent document cited in search report | | | Publication date | Patent family member(s) | | | Publication date |
|---|---|---|---|---|---|---|---|
| US 2019181682 | A1 | | 13-06-2019 | CN | 109936223 | A | 25-06-2019 |
| | | | | KR | 20190069982 | A | 20-06-2019 |
| | | | | US | 2019181682 | A1 | 13-06-2019 |
| US 2016254679 | A1 | | 01-09-2016 | CN | 105932888 | A | 07-09-2016 |
| | | | | TW | 201631888 | A | 01-09-2016 |
| | | | | US | 2016254679 | A1 | 01-09-2016 |
| US 2010277003 | A1 | | 04-11-2010 | CN | 102396132 | A | 28-03-2012 |
| | | | | CN | 104901432 | A | 09-09-2015 |
| | | | | EP | 2409378 | A1 | 25-01-2012 |
| | | | | EP | 2988428 | A1 | 24-02-2016 |
| | | | | ES | 2553138 | T3 | 04-12-2015 |
| | | | | ES | 2705081 | T3 | 21-03-2019 |
| | | | | HU | E042668 | T2 | 29-07-2019 |
| | | | | JP | 5612069 | B2 | 22-10-2014 |
| | | | | JP | 5728612 | B2 | 03-06-2015 |
| | | | | JP | 2012521737 | A | 13-09-2012 |
| | | | | JP | 2015019576 | A | 29-01-2015 |
| | | | | KR | 20110134912 | A | 15-12-2011 |
| | | | | KR | 20160071478 | A | 21-06-2016 |
| | | | | TW | 201106572 | A | 16-02-2011 |
| | | | | US | 2010277003 | A1 | 04-11-2010 |
| | | | | US | 2013113299 | A1 | 09-05-2013 |
| | | | | WO | 2010108191 | A1 | 23-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 19207239 A